Europäisches Patentamt

European Patent Office

Office européen des brevets

(11) Numéro de publication: **0 198 278**
**A1**

## (12) DEMANDE DE BREVET EUROPEEN

(21) Numéro de dépôt: 86104034.3

(22) Date de dépôt: 24.03.86

(51) Int. Cl.⁴: **A44B 11/00** , **A44C 5/20** , **B29C 65/00**

(30) Priorité: 02.04.85 FR 8505108

(43) Date de publication de la demande:
**22.10.86 Bulletin 86/43**

(84) Etats contractants désignés:
**CH DE FR GB LI**

(71) Demandeur: **ETA S.A. Fabriques d'Ebauches
Schild-Rust-Strasse 17
CH-2540 Grenchen(CH)**

(72) Inventeur: **Mock, Elmar
Rue des Tilles 353
CH-2603 Pery(CH)**
Inventeur: **Hotz, Jean-Marie
57, Route Principale
CH-2535 Frinvillier(CH)**

(74) Mandataire: **de Montmollin, Henri et al
SMH Société Suisse de Microélectronique et
d'Horlogerie S.A. Département Brevets et
Licences 6, Faubourg du Lac
CH-2501 Bienne(CH)**

(54) **Article de fantaisie.**

(57) Le brin (1a) et le fermoir (4) que comporte
l'article de fantaisie sont solidaires l'un de l'autre et
réalisés respectivement en une première et une deuxième matière plastique thermoplastique.

Fig.1

EP 0 198 278 A1

# ARTICLE DE FANTAISIE

La présente invention a pour objet un article de fantaisie comportant au moins un premier brin de forme générale allongée et un fermoir fixé à une première extrémité dudit premier brin pour relier cette première extrémité à la deuxième extrémité dudit brin ou à une première extrémité d'un autre brin.

Un tel article de fantaisie peut être, par exemple, un bracelet, notamment pour une montre, une ceinture, une bretelle pour sac à main, etc...

Les fermoirs associés à ces articles de fantaisie comportent, dans la plupart des cas, une boucle, souvent métallique, articulée à une extrémité du brin, ou de l'un des deux brins, que comprend l'article de fantaisie. Cette boucle est associée à un ardillon, destiné à s'engager dans un trou percé à l'autre extrémité du brin ou, le cas échéant, à l'extrémité de l'autre brin.

Ces boucles et ces ardillons doivent être fabriqués pour eux-mêmes et montés ensuite à l'endroit voulu.

La réalisation d'un fermoir utilisant ces éléments nécessite donc une suite assez importante d'opérations qui renchérissent l'article de fantaisie. En outre, ces boucles et ces ardillons ne sont past très esthétiques.

Le but de la présente invention est de proposer un article de fantaisie du genre défini ci-dessus ayant un aspect plaisant et dont le fermoir soit très bon marché et qui ait un aspect plus plaisant que les fermoirs connus.

Ce but est atteint par l'article de fantaisie revendiqué.

L'invention va maintenant être décrite en prenant comme exemple non limitatif d'article de fantaisie un bracelet pour montre. La description va être faite en se référant au dessin dans lequel:

-la figure 1 est une vue en plan partielle et - schématique d'un bracelet et d'un fermoir selon l'invention.

-les figures 2 et 3 sont des coupes partielles et schématiques réalisées selon les axes A-A et, respectivement, B-B de la figure 1;

-la figure 4 est une coupe partielle et - schématique selon l'axe A-A d'une variante du fermoir de la figure 1;

-les figures 5 à 7 sont des coupes partielles et schématiques selon l'axe B-B de trois variantes du bracelet et du fermoir des figures 1 à 3;

-la figure 8 est une vue en plan partielle et - schématique illustrant deux variantes du bracelet des figures 1 à 3; et

-les figures 9 à 12 sont des coupes longitudinales partielles et schématiques de diverses variantes du bracelet de la figure 8.

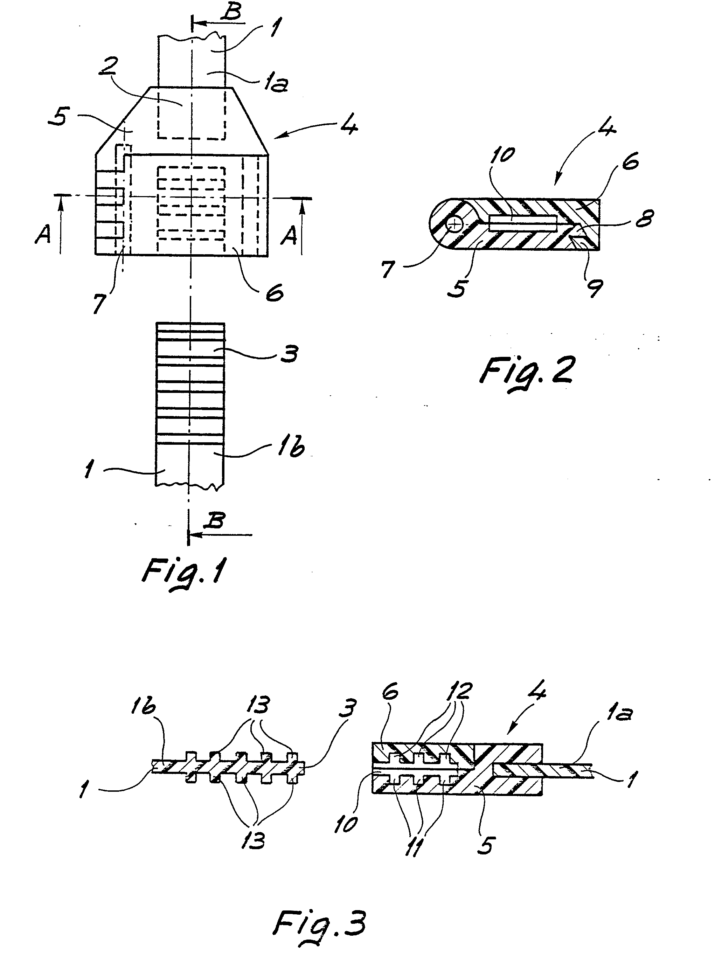

Le bracelet 1 représenté aux figures 1 à 3 comporte deux brins 1a et 1b. Ces brins 1a et 1b sont destinés à être fixés, par une de leurs extrémités, de manière quelconque, à une boîte de montre non représentée.

Dans la suite de cette description, les autres extrémités de ces brins 1a et 1b seront seules considérées et désignées comme étant les extrémités 2 et 3 du bracelet 1.

Un fermoir 4 est destiné à relier ces extrémités 2 et 3 du bracelet 1. Ce fermoir 4 comporte un premier élément, désigné par 5, dont une partie entoure étroitement l'extrémité 2 du bracelet 1 et qui est solidaire de cette extrémité 2.

Le fermoir 4 comporte un deuxième élément, désigné par 6, qui est relié à l'élément 5 par un arbre 7. Cet arbre 7 est logé dans des ouvertures adéquates, prévues dans les éléments 5 et 6 et concentriques les unes avec les autres et avec l'arbre 7. Ces éléments 5 et 6 forment donc une sorte de charnière.

En outre, les éléments 5 et 6 comportent chacun un décrochement 8, respectivement 9, disposé sur au moins une partie de la longueur de leur bord opposé à l'arbre 7 et parallèlement à celui-ci.

Ces décrochements 8 et 9 ont des formes telles que les éléments 5 et 6 sont fermement accrochés l'un à l'autre lorsque le fermoir 4 est dans son état fermé. Ces formes sont en outre telles que les décrochements 8 et 9 peuvent être séparés pour permettre l'ouverture du fermoir 4 et à nouveau accrochés l'un à l'autre lorsque ce fermoir 4 doit être refermé.

La forme exacte de ces décrochements 8 et 9 ne sera pas décrite ici en détail, car elle peut être choisie assez librement.

Il faut cependant noter que, pour que cet accrochage et cette séparation des éléments 5 et 6 puissent se faire, il est nécessaire que l'un d'entre eux au moins présente une certaine élasticité, dans la zone des décrochements 8 et 9 tout au moins. Cette élasticité peut être obtenue par un choix judicieux du matériau utilisé pour réaliser l'élément concerné et de la forme de cet élément dans la zone de ces décrochements.

Lorsque le fermoir 4 est dans son état fermé, il subsiste dans sa partie centrale une cavité 10 qui est ouverte à l'extrémité du fermoir 4 opposée à l'extrémité 2 du bracelet 1.

Les parois des éléments 5 et 6 qui délimitent cette cavité 10 comportent des logements 11, respectivement 12 qui, dans cet exemple, ont la forme de rainures parallèles entre elles et perpendiculaires à la direction de la longueur du bracelet 1.

L'extrémité 3 du bracelet 1 comporte des protubérances 13 ayant une forme et une disposition adaptées à la forme et à la disposition des logements 11 et 12, c'est-à-dire, dans cet exemple, la forme de nervures parallèles entre elles et perpendiculaires à la direction de la longueur du bracelet 1.

Les protubérances 13 sont destinées à coopérer avec les logements 11 et 12 pour retenir l'extrémité 3 du bracelet 1 dans le fermoir 4 lorsque celui-ci est fermé.

Il faut noter que l'élément 5 ou l'élément 6 peut ne pas comporter de logement 11, respectivement 12. Dans un tel cas, l'extrémité 3 du bracelet 1 ne comporte de protubérance 13 que sur celle de ses faces qui est située du côté de l'élément 5 ou 6 qui est muni de logements 11 ou 12. Cette variante du fermoir n'est pas représentée.

L'utilisation du fermoir 4 est très simple et ressort clairement du dessin et des explications ci-dessus. Elle ne sera pas décrite ici.

Le brin 1a du bracelet 1 de l'ensemble selon l'invention représenté par les figures 1 à 3 est réalisé, d'une manière qui sera décrite plus loin, en une matière plastique thermoplastique ayant la propriété dêtre souple aux températures usuelles d'emploi. Une telle matière peut faire partie, par exemple, de la classe des élastomères thermoplastiques. De bons résultats ont été obtenus avec la matière vendue sous le nom commercial de PE-BAX (marque déposée) par la maison ATOCHEM à Serquigny (France).

Le brin 1b du bracelet 1 est réalisé, d'une manière qui sera aussi décrite plus loin, en une matière plastique thermoplastique qui est, de préférence, la même que celle du brin 1a, mais qui peut être également différente.

L'élément 5 du fermoir 4 est réalisé, d'une manière qui sera également décrite plus loin, en une matière plastique thermoplastique ayant la propriété d'être solide aux températures usuelles d'emploi et, en outre, d'avoir une bonne adhérence sur la matière plastique du brin 1a. Cette deuxième matière plastique peut être, par exemple, une résine polyamide du genre de celle qui est vendue sous le nom commercial de RILSAN (marque déposée) par la maison ATOCHEM mentionnée ci-dessus.

L'élément 6 du fermoir 4 est réalisé, d'une manière qui sera aussi décrite plus loin, en une matière plastique thermoplastique qui est, de préférence, la même que celle de l'élément 5, mais qui peut également être différente.

L'article de fantaisie formé du bracelet 1 et du fermoir 4 peut être fabriqué très simplement. Sa fabrication consiste, tout d'abord, à injecter la matière plastique choisie pour réaliser le brin 1a dans un moule de forme adéquate, à une température égale ou supérieure à sa température de fusion.

Si le brin 1b du bracelet 1 est réalisé dans la même matière que le brin 1a, il peut être fabriqué en même temps que ce dernier, le moule étant alors prévu en conséquence.

Si le brin 1b du bracelet est réalisé dans une autre matière que le brin 1a, il est fabriqué séparément par injection de la matière voulue dans un moule adéquat.

Il faut noter que, dans les deux cas, les protubérances 13 sont formées en même temps que le reste du brin 1b.

Après que le brin 1a a été fabriqué de la manière décrite ci-dessus, son extrémité 2 est placée dans un deuxième moule qui a, en creux, la forme de l'élément 5 du fermoir 4, dans la situation que cette extrémité 2 doit avoir, par rapport à cet élément 5, dans l'ensemble terminé. La matière plastique choisie pour l'élément 5 est ensuite injectée dans ce deuxième moule, à une température égale ou supérieure à sa température de fusion.

Les deux matières plastiques sont choisies de manière que la première, qui constitue le brin 1a, ait une température de fusion inférieure à celle de la deuxième, qui constitue l'élément 5.

Grâce à ce choix, l'extrémité 2 du brin 1a est chauffée à une température supérieure à la température de fusion de la première matière plastique par la deuxième matière plastique qui vient à son contact lors de son injection.

Ce chauffage provoque la fusion, au moins superficielle, de la première matière plastique à cette extrémité 2 du bracelet 1. Dans la zone où les deux matières en fusion sont en contact, il se forme une couche d'un mélange intime, voire même d'une sorte d'alliage, de ces deux matières plastiques.

Après refroidissement, cette couche assure la liaison mécanique entre le brin 1a et l'élément 5 qui deviennent ainsi solidaires.

L'élément 6 du fermoir 4 peut être réalisé dans la même matière que l'élément 5. Dans ce cas, il peut être avantageusement fabriqué en même temps que ce dernier, le deuxième moule étant prévu en conséquence.

Cet élément 6 peut également être réalisé dans une autre matière que l'élément 5. Dans ce cas, il est fabriqué, par exemple, par injection dans un moule adéquat de la matière plastique choisie pour le réaliser.

L'élément 6 est ensuite relié à l'élément 5 par la mise en place de l'arbre 7 dans les ouvertures prévues à cet effet. Cet arbre 7 peut être une simple tige cylindrique, en laiton par exemple.

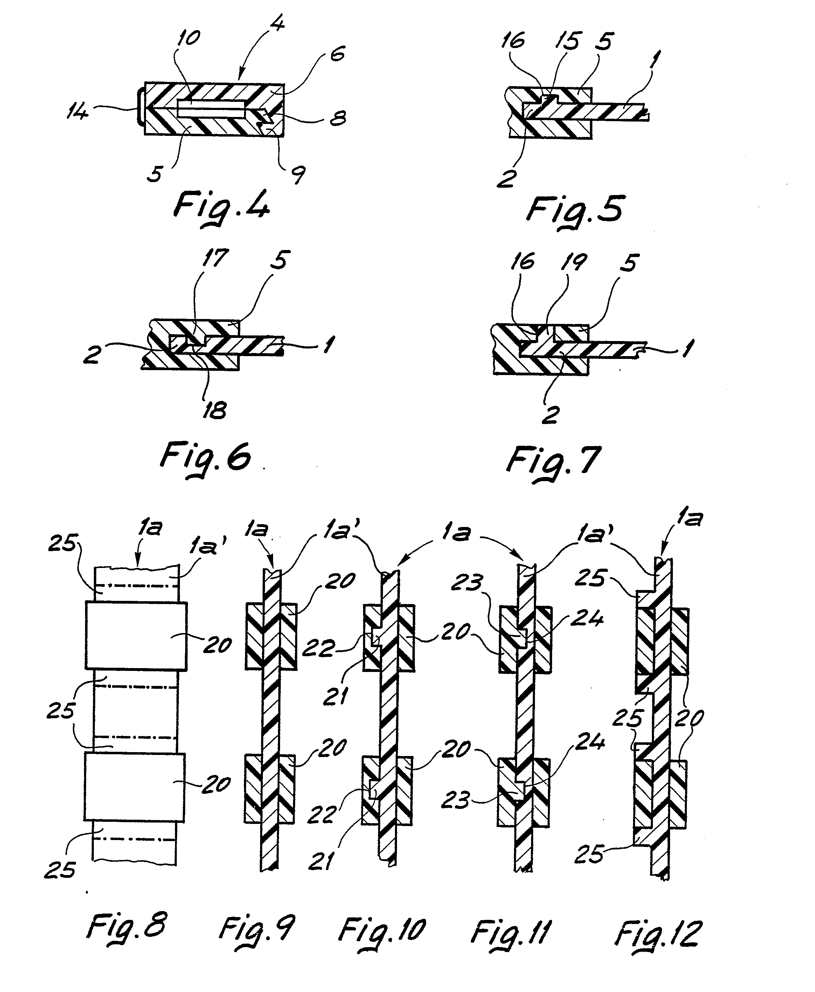

Dans une variante du fermoir 4 représentée à la figure 4, l'arbre 7 et les parties des éléments 5 et 6 qui coopèrent avec cet arbre 7 dans le fermoir des figures 1 à 3 sont supprimés. Dans cette variante, les éléments 5 et 6 sont reliés par un élément de liaison 14, par exemple en forme de membrane, ne formant qu'une seule pièce avec eux. La forme et les dimensions de cet élément de liaison 14 sont choisies de manière qu'il soit souple et permette le déplacement relatif des éléments 5 et 6 nécessaire à l'ouverture et à la fermeture du fermoir 4.

Dans cette variante, les éléments 5 et 6 et l'élément de liaison 14 sont évidemment réalisés dans la même matière plastique et fabriqués dans une seule et même opération d'injection.

Dans la variante illustrée par la figure 5, le bracelet 1 comporte, à son extrémité 2 une protubérance 15 qui est engagée dans un logement 16, de forme correspondante, ménagé dans cet élément 5.

Dans la variante illustrée par la figure 6, l'élément 5 comporte une protrubérance 17 qui est engagée dans un logement 18, de forme correspondante, ménagé dans le bracelet 1.

Dans ces deux variantes, la forme des protubérances 15 ou 17 est quelconque. De même, plusieurs protubérances semblables peuvent être prévues, du même côté du bracelet 1 ou des deux côtés de celui-ci. Ces protubérances peuvent, par exemple, avoir la forme de nervures transversales entourant complètement le bracelet 1. Dans chaque cas, les logements 16 ou 18 ont bien entendu la forme correspondante.

Les protubérances et les logements décrits ci-dessus ont pour effet de renforcer la liaison entre le bracelet 1 et l'élément 5. Lorsqu'ils sont prévus, le choix des matières plastiques utilisables pour réaliser ce bracelet 1 et cet élément 5 s'élargit, car il n'est plus nécessaire que ces matières adhèrent l'une à l'autre comme dans le cas des figures 1 à 3.

Dans la variante illustrée par la figure 7, l'extrémité 2 du bracelet 1 comporte une protubérance 19 dont l'épaisseur est telle qu'elle traverse la paroi de l'élément 5 et apparaît à la surface extérieure de celui-ci.

La forme de la partie visible de cette protubérance 19 pouvant être choisie très librement, cette dernière a donc un effet esthétique, en plus de son effet de renforcement de la liaison entre le bracelet 1 et l'élément 5.

Il est évident que plusieurs protubérances telles que la protubérance 19 peuvent être prévues.

La présence des protubérances et des logements décrits ci-dessus ne complique pas la fabrication du bracelet et du fermoir. En effet, les protubérances et/ou les logements prévus dans le bracelet 1 sont obtenus en donnant au moule utilisé pour la fabrication de celui-ci la forme voulue. Les logements et/ou les protubérances correspondants prévus dans l'élément 5 sont automatiquement réalisés lors de l'injection de la deuxième matière plastique.

Les figures 8 à 12 illustrent des variantes du bracelet de l'article de fantaisie selon l'invention, variantes qui peuvent se combiner avec n'importe laquelle de celles qui ont été décrites ci-dessus.

Dans toutes les variantes des figures 8 à 12, le bracelet 1, dont seul le brin 1a a été représenté, comporte une âme 1a' et des éléments décoratifs 20, réalisés de préférence dans la même matière plastique que l'élément 5 du fermoir 4.

Ces éléments décoratifs 20 ont une forme générale d'anneau, enserrant étroitement l'âme 1a' sur une partie de sa longueur, et sont solidaires de celle-ci. Ils sont séparés les uns des autres par des espaces réguliers ou irréguliers, de sorte que l'âme 1a' est visible entre eux.

Dans la variante illustrée par la figure 9, la liaison entre les éléments décoratifs 20 et l'âme 1a' du brin 1a est assurée par adhérence des matières plastiques qui les constituent, comme dans le cas de la liaison du bracelet 1 et de l'élément 5 du fermoir 4 des figures 1 à 3.

Dans la variante de la figure 10, l'âme 1a' du brin 1a comporte des protubérances 21 qui sont engagées dans des logements 22 ménagés dans les éléments décoratifs 20.

Comme dans le cas de la protubérance 19 de la figure 7, les protubérances 21 de la figure 10 peuvent avoir une épaisseur telle qu'elles apparaissent à la surface de l'élément décoratif 20. Cette dernière possibilité n'est pas représentée.

Dans la variante de la figure 11, les éléments décoratifs 20 comportant des protubérances 23 qui sont engagées dans des logements 24 ménagés dans l'âme 1a' du brin 1a.

Enfin, dans la variante de la figure 12, l'âme 1a' du brin 1a comporte des protubérances 25 disposées de part et d'autre des éléments décoratifs 20. Ces protubérances 25, qui sont évidemment visibles dans une vue en plan du brin 1a, ont été représentées en traits mixtes à la figure 8 qui est une vue en plan commune à toutes les variantes des figures 9 à 12.

Les protubérances 21, 23 et 25 et les logements 22 et 24 décrits ci-dessus ont pour effet de renforcer la liaison entre l'âme 1a' du brin 1a et les éléments décoratifs 20.

Les protubérances 21 de la figure 10, lorsqu'elles sont suffisamment épaisses pour apparaître à la surface des éléments décoratifs 20, et les protubérances 25 de la figure 12, ont en outre un effet esthétique.

Toutes ces protubérances 21, 23 et 25 peuvent avoir des formes et des dimensions quelconques. Elles peuvent être disposées sur un seul côté de l'âme 1a' du brin 1a ou sur ses deux côtés. Elles peuvent, par exemple, avoir la forme de nervures transversales entourant complètement l'âme 1a'.

Dans les cas des figures 10 et 11, les logements 22 et 24 ont bien entendu chaque fois la forme correspondante.

Dans le cas de la figure 12, il n'est pas nécessaire que les protubérances 25 soient en contact avec les éléments décoratifs 20 sur la totalité des bords de ceux-ci. Il suffit que ce contact ait lieu en un ou quelques points de ces bords.

En outre, dans toutes les variantes des figures 9 à 12, la forme des faces extérieures des éléments décoratifs 20 peut être quelconque.

La présence des éléments décoratifs 20 ne renchérit pas la fabrication du bracelet 1.

En effet, ces éléments décoratifs 20 peuvent être facilement réalisés au cours de la même opération d'injection que l'élément 5 du fermoir 4. En outre, les divers logements et/ou protubérances qui sont prévus dans les variantes des figures 10 à 12 sont obtenus en donnant une forme adéquate au moule utilisé pour l'injection de la première matière plastique. Les logements et/ou les protubérances correspondants des éléments décoratifs 20 sont automatiquement réalisés lors de l'injection de la deuxième matière plastique.

Les surfaces extérieures du bracelet 1, des éléments 5 et 6 du fermoir 4 et des éléments décoratifs 20 décrits ci-dessus ne sont pas nécessairement planes comme cela a été représenté dans les figures 1 à 12. Ces surfaces peuvent être, par exemple, bombées ou creusées. Ces surfaces peuvant également ne pas être lisses, mais rugueuses, striées, etc...

Toutes ces variantes, qui ne sont pas représentées, peuvent être obtenues en donnant aux moules utilisés pour la fabrication de ces diverses pièces des formes adéquates.

L'invention telle qu'elle vient d'être décrite, ainsi que toutes les variantes qui peuvent être imaginées, s'applique évidemment à tous les articles de fantaisie du genre défini dans le préambule de la présente description, que cet article présente deux brins allongés, comme le bracelet pour montre qui a été décrit, ou un seul brin, comme les ceintures. Dans ce dernier cas, le fermoir est solidaire de l'une des extrémités du brin unique, et c'est l'autre extrémité de ce brin unique qui porte les protubérances telles que les protubérances 13 des figures 1 et 2, destinées à coopérer avec les logements tels que les logements 11 et/ou 12 de ces mêmes figures.

Diverses autres modifications peuvent être apportées à l'article de fantaisie selon l'invention tel qu'il a été décrit ci-dessus.

Notamment, son aspect peut être facilement modifié par un changement de la matière plastique utilisée et/ou de la couleur de cette matière.

Cet aspect peut également être modifié en changeant la forme des moules utilisés pour l'injection des matières plastiques.

En outre, cet article de fantaisie se prête bien à la fabrication en grandes séries, et son prix de revient peut être assez bas.

## Revendications

1. Article de fantaisie comportant au moins un premier brin de forme générale allongée et un fermoir fixé à une première extrémité dudit premier brin pour relier cette première extrémité à la deuxième extrémité dudit premier brin ou à une première extrémité d'un autre brin, caractérisé par le fait que ledit premier brin (1a) est réalisé, au moins en partie, en une première matière plastique thermoplastique, que ledit fermoir (4) comporte un premier élément (5) réalisé en une deuxième matière plastique thermoplastique ayant une température de fusion supérieure à celle de la première matière plastique, entourant ladite première extrémité (2) et étant solidaire de celle-ci, que ledit fermoir (4) comporte un deuxième élément (6) articulé sur ledit premier élément (5) et susceptible de prendre, par rapport audit premier élément (5), une position dans laquelle ledit fermoir (4) est dans un état fermé et dans laquelle lesdits premier (4) et deuxième (5) éléments définissent entre eux une cavitié (10) destinée à recevoir ladite deuxième extrémité (3) dudit premier brin (1a) ou ladite première extrémité dudit autre brin, et que l'un au moins desdits premier (4) et deuxième (5) éléments comporte des moyens (11, 12) destinés à coopérer avec des moyens correspondants (13) que comporte ladite deuxième extrémité (3) dudit premier brin (1a) ou ladite première extrémité dudit autre brin pour retenir ladite deuxième extrémité - (3) dudit premier brin (1a) ou ladite première extrémité dudit autre brin dans ladite cavité (10) lorsque ledit fermoir (4) est fermé.

2. Article de fantaisie selon la revendication 1, caractérisé par le fait que ledit premier élément (5) est solidaire de ladite première extrémité (2) dudit premier brin (1a) par adhérence desdites première et deuxième matières plastiques.

3. Article de fantaisie selon la revendication 1, caractérisé par le fait que ladite première extrémité (2) dudit premier brin (1a) comporte une protubérance (15, 19) engagée dans un logement (16) ménagé dans ledit premier élément (5).

4. Article de fantaisie selon la revendication 1, caractérisé par le fait que ledit premier élément (5) comporte une protubérance (17) engagée dans un logement (18) ménagé dans ladite première extrémité (2) dudit premier brin (1a).

5. Article de fantaisie selon la revendication 1, caractérisé par le fait que ledit premier élément (5) comporte des moyens (8) destinés à coopérer avec des moyens correspondants (9) que comporte ledit deuxième élément (6) pour maintenir ledit fermoir (4) dans son état fermé.

6. Article de fantaisie selon la revendication 1, caractérisé par le fait que ledit deuxième élément - (6) est articulé sur ledit premier élément (5) par l'intermédiaire d'un arbre (7) logé dans des ouvertures coaxiales entre elles que comportent lesdits premier (5) et deuxième (6) éléments.

7. Article de fantaisie selon la revendication 1, caractérisé par le fait que ledit deuxième élément - (6) est réalisé dans ladite deuxième matière plastique.

8. Article de fantaisie selon la revendication 1, caractérisé par le fait que ledit deuxième élément - (6) est réalisé dans ladite deuxième matière plastique et qu'il est articulé sur ledit premier élément - (5) par l'intermédiaire d'un élément de liaison (14) souple également réalisé dans ladite deuxième matière plastique, lesdits premier (5) et deuxième - (6) éléments et ledit élément de liaison (14) étant d'une seule pièce.

9. Article de fantaisie selon la revendication 1, caractérisé par le fait que ledit premier brin (1a) comporte une âme (1a') réalisée dans ladite première matière plastique et un élément décoratif - (20) entourant ladite âme (1a') sur une partie de sa longueur, solidaire de ladite âme (1a') et réalisé dans ladite deuxième matière plastique.

10. Article de fantaisie selon la revendication 9, caractérisé par le fait que ledit élément décoratif - (20) est solidaire de ladite âme (1a') par adhérence desdites première et deuxième matières plastiques.

11. Article de fantaisie selon la revendication 9, caractérisé par le fait que ladite âme (1a') comporte une protubérance (21) engagée dans un logement (22) ménagé dans ledit élément décoratif - (20).

12. Article de fantaisie selon la revendication 9, caractérisé par le fait que ledit élément décoratif - (20) comporte une protubérance (23) engagée dans un logement (24) ménagé dans ladite âme (1a').

13. Article de fantaisie selon la revendication 9, caractérisé par le fait que ladite âme (1a') comporte deux protubérances (25) disposées de part et d'autre dudit élément décoratif (20).

Fig.1

Fig.2

Fig.3

Fig.4

Fig.5

Fig.6

Fig.7

Fig.8    Fig.9    Fig.10    Fig.11    Fig.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 204 016 (BAXTER TRAVENOL LABORATORIES) * Page 1, lignes 12-16; page 2, ligne 25 - page 3, ligne 14 * | 1 | A 44 B 11/00 A 44 C 5/20 B 29 C 65/00 |
| A | FR-A-2 165 852 (KORIN LTD.) * Page 1, ligne 30 - page 5, ligne 17; figures 1-3 * | 1,5,6, 8 | |
| A | US-A-4 178 751 (LIAUTAUD) * Colonne 6, lignes 55-68; figure 1 * | 1,9 | |
| P,A | FR-A-2 561 795 (CASIO COMPUTER) * Page 3, ligne 30 - page 4, ligne 34 * | 1 | |

DOMAINES TECHNIQUES RECHERCHES (Int. Cl.4)

A 44 B
A 44 C
A 41 F
A 45 C
B 29 C
G 04 B

Le present rapport de recherche a été établi pour toutes les revendications

| Lieu de la recherche | Date d'achèvement de la recherche | Examinateur |
|---|---|---|
| LA HAYE | 25-06-1986 | PINEAU A.C. |